(19) Europäisches Patentamt
European Patent Office
Office européen des brevets

(11) **EP 3 885 141 A1**

(12) **EUROPEAN PATENT APPLICATION**

(43) Date of publication:
**29.09.2021 Bulletin 2021/39**

(51) Int Cl.:
*B33Y 70/00* (2020.01)      *B33Y 70/10* (2020.01)
*B33Y 10/00* (2015.01)      *B33Y 30/00* (2015.01)
*B29C 64/153* (2017.01)      *B29C 64/165* (2017.01)
*C08J 3/12* (2006.01)

(21) Application number: **21161453.2**

(22) Date of filing: **09.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2020 JP 2020050879**

(71) Applicant: **Ricoh Company, Ltd.
Tokyo 143-8555 (JP)**

(72) Inventors:
• **Miki, Tomoharu
  Tokyo 143-8555 (JP)**
• **Ogawa, Satoshi
  Tokyo 143-8555 (JP)**
• **Naruse, Mitsuru
  Tokyo 143-8555 (JP)**

(74) Representative: **SSM Sandmair
Patentanwälte Rechtsanwalt
Partnerschaft mbB
Joseph-Wild-Straße 20
81829 München (DE)**

(54) **RESIN POWDER, THREE-DIMENSIONAL OBJECT PRODUCING METHOD USING THE RESIN POWDER, AND THREE-DIMENSIONAL OBJECT PRODUCING APPARATUS**

(57)     Provided is a resin powder including first particles containing a polyolefin-based resin, wherein surfaces of the first particles are coated with second particles at an average coating ratio of 0.15 or greater, where the average coating ratio is measured with a Material Development Kit (MDK) at a temperature lower than a melting point of the resin powder for producing a three-dimensional object by 15 degrees C.

FIG. 2

EP 3 885 141 A1

**Description**

BACKGROUND OF THE INVENTION

Field of the Invention

The present disclosure relates to a resin powder, a resin powder for producing a three-dimensional object, a three-dimensional object producing method, and a three-dimensional object producing apparatus.

Description of the Related Art

Hitherto, resin powders have been used in various fields. For example, it is known to use a resin powder as an object forming material for producing a three-dimensional object. For example, the resin powder described in Japanese Unexamined Patent Application Publication No. 2006-321711 has been known as a resin powder used for producing a three-dimensional object.

SUMMARY OF THE INVENTION

According to an aspect of the present disclosure, a resin powder contains first particles containing a polyolefin-based resin. The surfaces of the first particles are coated with second particles at an average coating ratio of 0.15 or greater, where the average coating ratio is measured with a Material Development Kit (MDK) at a temperature lower than the melting point of the resin powder by 15 degrees C.

BRIEF DESCRIPTION OF THE DRAWINGS

FIG. 1A is a schematic view illustrating a method for measuring a circularity of a particle;
FIG. 1B is a schematic view illustrating a method for measuring a circularity of a particle;
FIG. 2 is a schematic view illustrating an example of a three-dimensional object producing apparatus used in a three-dimensional object producing method of the present disclosure;
FIG. 3A is a schematic view illustrating an example of a step of forming a powder layer having a smooth surface;
FIG. 3B is a schematic view illustrating an example of a step of forming a powder layer having a smooth surface;
FIG. 3C is a schematic view illustrating an example of a step of dropping a liquid material for producing a three-dimensional object;
FIG. 3D is a schematic view illustrating an example of a step in which a resin powder layer is newly formed in a powder storing tank for forming;
FIG. 3E is a schematic view illustrating an example of a step in which a resin powder layer is newly formed in a powder storing tank for forming;
FIG. 3F is a schematic view illustrating an example of a step of again dropping a liquid material for producing a three-dimensional object;
FIG. 4A is a view illustrating an example for describing a method for measuring an average coating ratio of the present disclosure;
FIG. 4B is a view illustrating another example for describing a method for measuring an average coating ratio of the present disclosure;
FIG. 4C is a view illustrating another example for describing a method for measuring an average coating ratio of the present disclosure; and
FIG.4D is a view illustrating another example for describing a method for measuring an average coating ratio of the present disclosure.

DESCRIPTION OF THE EMBODIMENTS

(Resin powder)

A resin powder of the present disclosure contains first particles containing a polyolefin-based resin. The surfaces of the first particles are coated with second particles at an average coating ratio of 0.15 or greater, where the average coating ratio is measured with a Material Development Kit (MDK) at a temperature lower than the melting point of the resin powder by 15 degrees C. The resin powder further contains other materials as needed.

In order to improve fluidity of existing resin powders, it has been disclosed to provide resin powders with a specific circularity or attach external additives having an average particle diameter of 1 micrometer or less on the surface of resin powders. Although existing techniques have disclosed fluidity of resin powders at normal temperature, existing techniques may have difficulty obtaining resin powders having a desired fluidity even when the resin powders are heated.

It has been found that the resin powder of the present disclosure having second particles (external additive) attached on the surface thereof more firmly than by existing techniques and satisfying specific physical properties can obtain an excellent fluidity even when the resin powder is heated (for example, to a temperature lower than the melting point of the resin by from 15 degrees C through 20 degrees C).

The present disclosure has an object to provide a resin powder excellent in fluidity in a high-temperature environment.

The present disclosure can provide a resin powder excellent in fluidity in a high-temperature environment.

The resin powder of the present disclosure can be used as materials and substitute materials for metals used in the fields of, for example, three-dimensional object production, electronic equipment, automobiles, prototypes and trial products for strength tests, surface modifiers, spacers, lubricants, paints, grindstones, additives, secondary battery separators, foods, cosmetics, garment, precision equipment, semiconductors, aerospace, and medical care. A resin powder for producing a three-dimensional object, used as a resin powder in production of a three-dimensional object, will be described in detail below.

<Polyolefin-based resin>

The polyolefin-based resin is a polymer obtained from polymerization of a monomer having a polyolefin skeleton.

The polyolefin-based resin is used in a wide range of fields as a structural material because the polyolefin-based resin is inexpensive and has an excellent mechanical property. Therefore, studies into the polyolefin-based resin are actively conducted in a wide range of applications, particularly, an application to production of three-dimensional objects.

Examples of the polyolefin-based resin include polyethylene and polypropylene. One of these polyolefin-based resins may be used alone or two or more of these polyolefin-based resins may be used in combination. Among these polyolefin-based resins, polypropylene has good properties such as the highest heat resistance among commodity resins, a higher strength than other resins, an excellent chemical resistance, a low specific gravity with floatability on water, and non-hygroscopicity. Polypropylene can be produced industrially, and has a wide range of applications such as stationery, paper money, automobile parts, packaging materials, fiber products, plastic parts, various containers, and experimental tools.

Examples of the polypropylene resin include homopolypropylene, which is a homopolymer of propylene, random copolymerized polypropylene, which is obtained by simultaneously polymerizing ethylene and propylene, and block copolymerized polypropylene, which is obtained by polymerizing an ethylene-propylene-terpolymer (synthetic rubber) with homopolypropylene. One of these polypropylene resins may be used alone or two or more polypropylene resins may be used in combination.

Among these polypropylene resins, block copolymerized polypropylene resin that has a rubber elasticity and is used for exterior parts of automobiles is suitable for application to production of three-dimensional objects.

The block copolymerized polypropylene resin is also preferable in terms of a high elasticity and an easy elongability, and a relatively high strength to the contrary.

For example, for use in production of three-dimensional objects, block copolymers are preferable because block copolymers can produce three-dimensional objects excellent in heat resistance and strength, have a higher crystallinity and a higher melting point than random copolymers and mono-polypropylene and hence have a higher tensile strength, can secure a process window, and can hence produce objects that are good in terms of warpage and roughness.

The (weight) average molecular weight of the polyolefin-based resin is preferably 200,000 or greater but 300,000 or less and more preferably 300,000 or greater but 2,500,000 or less.

The content of the polyolefin-based resin is preferably 50% by mass or greater, more preferably 70% by mass or greater, and yet more preferably 95% by mass or greater relative to the total amount of the resin powder.

Heat resistance of a three-dimensional object can be evaluated based on the deflection temperature under load.

The deflection temperature under load is one of testing methods for evaluating heat resistance of synthetic resins, and refers to a temperature at which the deflection level of a sample becomes constant when the temperature of the sample is raised in a state that a load, which is defined by the testing method standards, is applied to the sample. The testing method is stipulated by, for example, ASTM D648, and JIS 7191.

The strength of a three-dimensional object can be measured and evaluated according to a tensile test compliant with ISO 527.

-Average circularity-

As the average circularity, an arithmetic mean value of the circularity of the resin powder obtained by measurement can be used. A true circle has an average circularity of 1, and a more deformed circle has a lower average circularity value.

The average circularity of the resin powder is 0.70 or greater, preferably 0.950 or greater, and more preferably 0.980 or greater.

When the average circularity of the resin powder is less than 0.70, the resin powder has a poor fluidity in a high-temperature environment. For example, when the resin powder is used in production of a three-dimensional object, particles having a wider surface area are fricted more times and triboelectrically charged more heavily, leading to increase of attachment of the particles during recoating. Moreover, particles having a wider surface area have a wider portion to attach to other particles, leading to aggregation of particles. This degrades recoatability, and surface property and dimensional stability of a three-dimensional object to be obtained.

When the average circularity of the resin powder is 0.70 or greater, the resin powder having a small surface area can be suppressed from being triboelectrically charged, does not electrostatically or non-electrostatically attach to anything during recoating in production of a three-dimensional object, have an improved fluidity, and can produce an object without aggregation of particles or attachment to the recoater, leading to improvement of dimensional stability.

As a method for easily obtaining the circularity, for example, the circularity can be quantified by measurement with a wet flow-type particle diameter/shape analyzer (instrument name: FPIA-3000, available from Sysmex Corporation).

The wet flow-type particle diameter/shape analyzer can capture, at a high speed, images of particles in a suspension flowing in a glass cell with a CCD, and analyze individual particle images real-time. Such a system for capturing images of particles and analyzing the images is effective for obtaining the average circularity of the present disclosure. The number of particles to be counted for measurement is not particularly limited, but is preferably 1,000 or greater and more preferably 3,000 or greater.

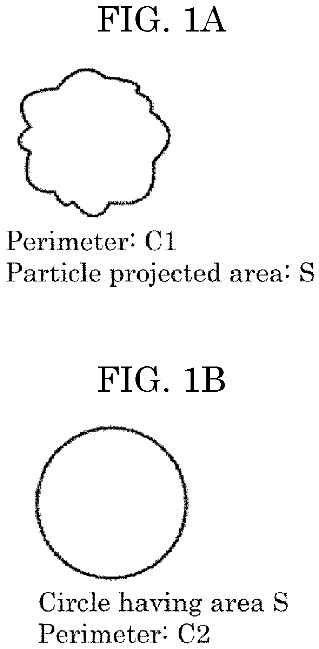

Specifically, a surfactant, preferably alkylbenzene sulfonate (from 0.1 mL through 0.5 mL) is added as a dispersant to previously impurity solid-removed water (from 100 mL through 150 mL) in a container, and a measurement sample (about from 0.1 g through 0.5 g) is further added to the resultant. Subsequently, this measurement sample-dispersed suspension is subjected to dispersion treatment for about from one minute through three minutes using an ultrasonic disperser (BRANSON 2510J-MT, with an ultrasonic output power of 125 W and an oscillation frequency of 42 kHz) to prepare a dispersion liquid having a concentration of from 3,000 particles/microliter through 10,000 particles/microliter. The dispersion liquid is set in the wet flow-type particle diameter/shape analyzer, and the shape and distribution of the measurement sample are measured. Based on the measurement results, a value C2/C1 is calculated, where C1 is the perimeter of the projected shape of the measurement sample illustrated in FIG. 1A, and C2 is the perimeter of a true circle illustrated in FIG. 1B and having the same area as the projected area S of the projected shape of the measurement sample illustrated in FIG. 1A. An average of the value C2/C1 is used as the average circularity.

-Volume average particle diameter $Dv_A$-

The volume average particle diameter $Dv_A$ of the resin powder is preferably 30 micrometers or greater but 150 micrometers or less and more preferably 30 micrometers or greater but 100 micrometers or less. When the volume average particle diameter $Dv_A$ of the resin powder is 30 micrometers or greater but 150 micrometers or less, the resin powder can be suppressed from being aggregated due to charging, and can have an improved fluidity. When the resin powder is used in production of a three-dimensional object, the resin powder that has a volume average particle diameter $Dv_A$ of 30 micrometers or greater but 150 micrometers or less is easily grounded smoothly in a powder bed additive manufacturing method because the resin powder has an excellent fluidity even when the resin powder is heated (to a temperature lower than the melting point of the resin by from 15 degrees C through 20 degrees C), leading to improvement of heandleablity (recoatability). Moreover, when the volume average particle diameter $Dv_A$ of the resin powder is 30 micrometers or greater but 150 micrometers or less, for example, an object has an inconspicuous surface roughness and has an improved surface property and an improved dimensional stability.

The volume average particle diameter $Dv_A$ of the resin powder expresses a volume-base average particle diameter and can be measured by a laser diffraction scattering method (Microtrac method, instrument name: MT3000II, available from MicrotracBel Corporation). MT3000II used for measuring the volume average particle diameter $Dv_A$ in the present disclosure needs to select a refractive index depending on the resin powder (sample) to be measured, as a setting for measurement. In the present disclosure, polyethylene is measured at a refractive index of 1.50, polypropylene is measured at a refractive index of 1.48, and values measured by a dry mode (solvent: air) are employed.

The number average particle diameter $Dn_A$ of the resin powder expresses a number-base average particle diameter. The particle size distribution (volume average particle diameter $Dv_A$/number average particle diameter $Dn_A$) of the resin powder expresses a distribution of the size of the particles.

The particle size distribution (volume average particle diameter $Dv_A$/number average particle diameter $Dn_A$) of the resin powder is preferably 2.2 or less, preferably 1.0 or greater but 2.0 or less, and more preferably 1.2 or greater but 1.8 or less. When the particle size distribution of the resin powder is 2.2 or less, the resin powder has an excellent fluidity. For example, when the resin powder is used for production of a three-dimensional object, layers can be densely filled with the resin powder when layers of the resin powder are additively manufactured, making it possible to improve the filling density during object production and improve the strength of a three-dimensional object to be produced.

The particle size distribution can be measured by the same method and with the same instrument as used for measuring the volume average particle diameter $Dv_A$.

-Average coating ratio-

The average coating ratio of the resin powder means a value measured with a Material Development Kit (MDK) at a temperature lower than the melting point of the resin powder by 15 degrees C.

The average coating ratio expresses a ratio at which the resin powder is coated with the second particles (external additive), and is a value that evaluates "fluidity" of the resin powder at a temperature lower than the melting point of the resin powder by 15 degrees C.

When the average coating ratio of the resin powder is 0.15 or greater, the resin powder has an excellent fluidity in high-temperature environment (from 80 degrees C through 160 degrees C).

The average coating ratio of the resin powder is 0.15 or greater, preferably 0.20 or greater but 0.50 or less, and more preferably 0.30 or greater but 0.40 or less. When the average coating ratio of the resin powder is 0.20 or greater but 0.50 or less, the resin powder has an improved fluidity in a high-temperature environment (from 80 degrees C through 160 degrees C). For example, when the resin powder is used for production of a three-dimensional object, the resin powder having an average coating ratio of 0.20 or greater but 0.50 or less can improve the surface property and strength of a three-dimensional object to be obtained.

The average coating ratio is measured with MATERIAL DEVELOPMENT KIT SPREADER TESTER (measuring instrument) available from Sigma Designs, Inc. and MATERIAL DEVELOPMENT KIT OPTICAL VISION SYSTEM available from Sigma Designs, Inc.

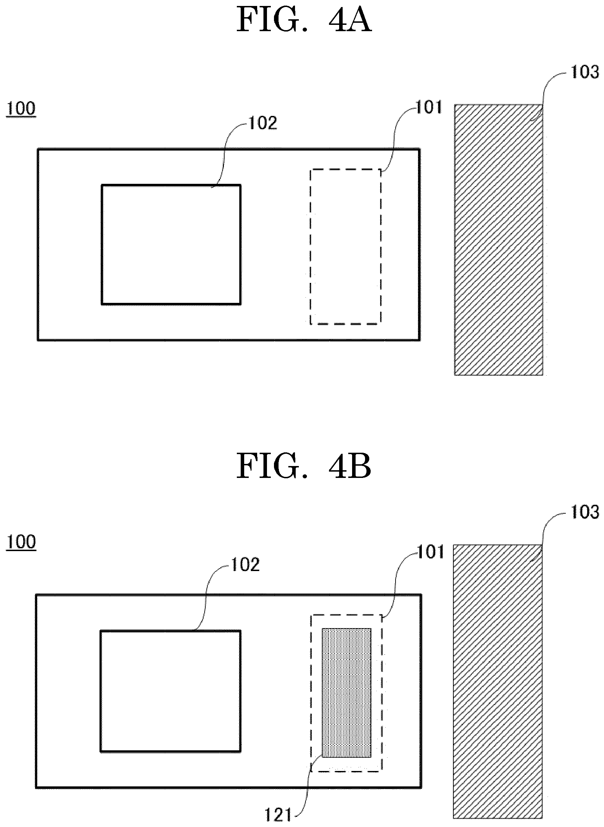

The method for measuring the average coating ratio with a Material Development Kit (MDK) in the present disclosure will be described with reference to FIG. 4A to FIG. 4D.

As illustrated in FIG. 4A, the measuring instrument 100 includes a heating unit 101, a measuring section 102, and a roller (recoater) 103. The measuring section 102 is a groove having a width of 2.5 cm, a length of 3.0 cm, and a depth of 0.2 mm.

First, as illustrated in FIG. 4B, a mold (or a frame, Sample Coupon-pocket depth=0.2 mm) having a hole having a width of 2.5 cm and a length of 3.0 cm is put on the heating unit 101 of the measuring instrument 100, and the measuring target resin powder 121 (0.3 g) is densely packed in the hole of the mold. When densely packing the resin powder, a flat plate is slid against the rim of the container at an angle of 45 degrees with respect to the opening surface of the container, to remove the resin powder protruding upward from the depth of the hole of the mold. Subsequently, the mold is removed, to leave only the measuring target resin powder 121 on the heating unit 101 of the measuring instrument 100.

In this state, the setting temperature of the heating unit 101 of the measuring instrument 100 is set to a temperature lower than the melting point of the measuring target resin powder 121 by 15 degrees C, and the resin powder 121 is heated for 10 minutes.

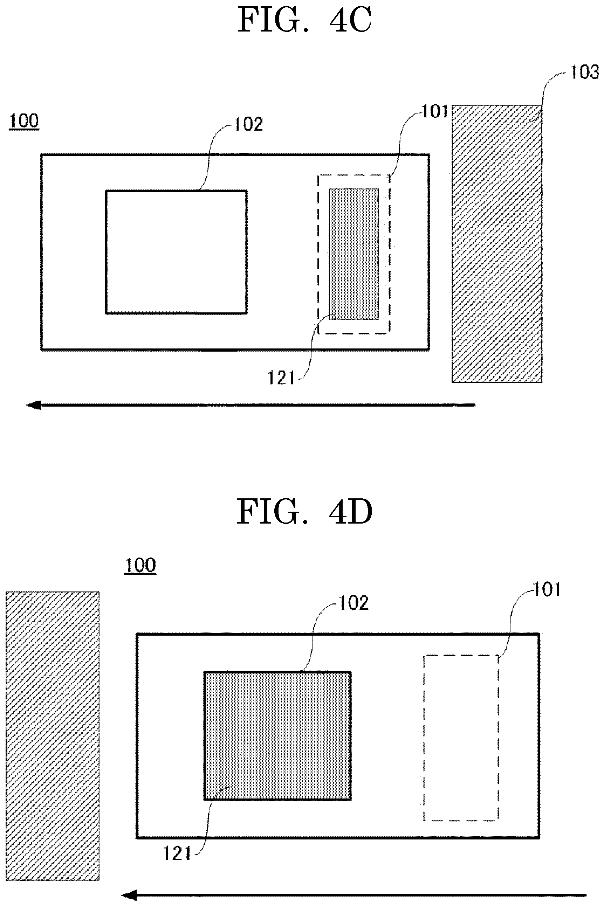

Next, the roller (recoater) 103 is moved in the direction of the arrow of FIG. 4C while being rotated at a recoating speed of 3 inches per second (IPS) (= about 64 mm/s), to move the resin powder 121 to the measuring section 102. After the resin powder is moved, an image of the measuring section 102 is captured from right above the measuring section 102 as illustrated in FIG. 4D.

Next, using MATERIAL DEVELOPMENT KIT OPTICAL VISION SYSTEM available from Sigma Designs, Inc., the area A of the measuring section 102 and an area B occupied by the resin powder 121 in the measuring section 102 are calculated from the captured image. For calculating the areas A and B, the captured image is measured by binarization of the image at a threshold THRESH of 163. A ratio (B/A) of the measured value of the area B occupied by the resin powder 121 in the measuring section 102 to the measured value of the area A of the measuring section 102 is calculated as the average coating ratio.

The melting point of the resin powder is preferably 100 degrees C or higher but 190 degrees C or lower, more preferably 120 degrees C or higher but 180 degrees C or lower, and yet more preferably 155 degrees C or higher but 170 degrees C or lower. When the melting point of the resin powder is 100 degrees C or higher but 190 degrees C or lower, the strength of an object can be improved.

The melting point can be measured by a method described below using a differential scanning calorimeter (DSC: TA-60S, available from Shimadzu Corporation).

Specifically, this method detects how a sample thermally behaves in accordance with temperature changes of the sample. Detailed conditions of the measuring method are compliant with JIS K-7121-1987 "Testing Methods for Transition Temperatures of Plastics).

Main thermal behaviors include exotherm, endotherm, and specific heat change. Exotherm or endotherm alone does not cause a baseline shift. In contrast, specific heat change causes a baseline shift.

As the conditions for measuring the melting point, a sample is weighed out in $5\pm0.5$ mg in an aluminum pan, heated from normal temperature to 200 degrees C at a heating rate of 10 degrees C/min in a nitrogen atmosphere, cooled to 0 degrees C, and then again heated to 200 degrees C under the same conditions. An endothermic peak in this first measurement is employed as the melting point (Tm).

At the melting point, an endothermic peak is measured, and a baseline shift in the strict sense of the term does not occur.

-Other properties-

The other properties are not particularly limited and may be appropriately selected depending on the intended purpose.

<Second particles>

The resin powder of the present disclosure contains an external additive on the surface thereof as second particles. That is, the resin powder of the present disclosure means a powder in a state that the surface thereof is coated with the external additive.

In the present disclosure, "a state that the surface thereof is coated with the external additive" is not particularly limited so long as the surface is coated enough to achieve the effect of the present disclosure, and the surface may be coated entirely or may be coated partially.

The number average particle diameter $Dn_B$ of the external additive is 1 micrometer or greater but 3 micrometers or less, preferably 1 micrometer or greater but 2.5 micrometers or less, and more preferably 1.0 micrometer or greater but 2.1 micrometers or less.

When the number average particle diameter $Dn_B$ of the external additive is 1 micrometer or greater but 3 micrometers or less, for example, the external additive is suppressed from being buried into the resin powder or from being detached from the surface of the resin powder when the resin powder is heated to about the melting point of the resin, making it possible to prevent the resin powder particles from being bound with each other. This can improve the fluidity of the resin powder in a high-temperature environment.

When the resin powder is used for production of a three-dimensional object, layers can be densely filled with the resin powder when layers of the resin powder are additively manufactured, making it possible to improve the filling density during object production and improve the surface property and strength of a three-dimensional object to be produced.

When the resin powder is used for production of a three-dimensional object, the external additive that has a number average particle diameter $Dn_B$ of 1 micrometer or greater but 3 micrometers or less reduces attachment of the resin powder to the members that handle the resin powder such as a recoater, making it possible to improve recoatability (handleability).

The method for measuring the number average particle diameter $Dn_B$ of the external additive is not particularly limited and may be appropriately selected. The number average particle diameter $Dn_B$ can be measured with, for example, an electron microscope.

The external additive is not particularly limited and may be appropriately selected depending on the intended purpose so long as the external additive can ensure fluidity at a high temperature (for example, from 80degrees C through 160 degrees C). Examples of the external additive include inorganic minute particles and resin minute particles. The resin powder containing the external additive on the surface thereof can have an improved fluidity in a high-temperature environment.

Examples of the inorganic minute particles include inorganic oxides such as silica, titania, alumina, and zinc oxide.

A commercially available product can be used as the inorganic minute particles. Examples of the commercially available product include: SO-C4, SO-C5, and SO-C6 (available from Admatex Co., Ltd.) and SEAHOSTER (registered trademark) KE-S S150 and SEAHOSTER (registered trademark) KE-S S250 (available from Nippon Shokubai Co., Ltd.) as the silica minute particles; and AA-1.5 (available from Sumitomo Chemical Company, Limited) as the alumina. One of these products may be use alone or two or more of these products may be used in combination.

Examples of the resin minute particles include styrene-based resins, acrylic-based resins, melamine-based resins, benzoguanamine-based resins, and copolymer resins containing these resins.

A commercially available product can be used as the resin minute particles. Examples of the commercially available product include: SX-130H (available from Soken Chemical & Engineering Co., Ltd.) as the styrene-based resins; MX-150 and MX-300 (available from Soken Chemical & Engineering Co., Ltd.) and MG-351 (available from Nippon Paint and Holdings Co., Ltd.) as the acrylic-based resins; EPOSTER S12 as the melamine/formaldehyde condensate-based resins; EPOSTER MS as the benzogunamine/formaldehyde condensate-based resins; and EPOSTER M30 as the copolymer resins. One of these products may be used alone or two or more of these products may be used in combination.

The external additive may serve as a lubricant or may serve as an aggregation preventing agent for preventing aggregation of particles.

Examples of the external additive that serves as a lubricant include boron nitride and zinc stearate.

Examples of the external additive that serves as an aggregation preventing agent include silicon oxide, zinc oxide, tin oxide, silica sand, titanium oxide, clay, mica, wollastonite, diatomaceous earth, chromium oxide, cerium oxide, red iron oxide, antimony trioxide, magnesium oxide, aluminum oxide, zirconium oxide, barium sulfate, barium carbonate, calcium carbonate, silicon carbide, and silicon nitride.

The external additive to which surface treatment is appropriately applied may be used. Examples of the surface treatment include hydrophobizing treatment such as hexamethyl disilazane (HMDS) treatment, amine treatment, and fluorine treatment for charging.

The amount of mass reduction of the external additive at 150 degrees C when measured according to ISO 7111-1987 is preferably 1% or less. With the external additive having an amount of mass reduction of 1% or less at 150 degrees C when measured according to ISO 7111-1987 is preferably 1% or less, for example, when the resin powder is used for production of a three-dimensional object, it is possible to suppress attachment of the resin powder to a laser window due to a gas emitted during object production and suppress contamination of the interior of the object producing apparatus.

The method for adding the external additive to the resin powder is not particularly limited and a known method may be employed. Examples of the method include a method of mixing the resin powder and the external additive using a mixer.

Examples of the mixer include a Henschel mixer (available from Nippon Coke & Engineering Co., Ltd.).

The mixing method is not particularly limited and may be appropriately selected depending on the intended purpose. Examples of the mixing method include stirring and mixing at a stirring speed of 15 m/s or higher but 50 m/s or lower for five minutes or longer but 20 minutes or shorter.

When the stirring speed is 15 m/s or higher, the external additive can be firmly attached on the resin powder, and fluidity degradation due to detachment of the external additive from the surface of the resin powder when the resin powder is heated to about the melting point of the resin powder can be suppressed.

When the stirring speed is 50 m/s or lower, fluidity degradation due to the external additive being buried into the resin powder to fail to serve as an external additive can be suppressed.

The ratio at which the external additive is attached on the resin powder is preferably 0.15 or greater but 0.85 or less, more preferably 0.20 or greater but 0.75 or less, and yet more preferably 0.25 or greater but 0.50 or less. When the ratio at which the external additive is attached on the resin powder is 0.15 or greater but 0.85 or less, the resin powder particles are prevented from directly bonding (i.e., non-electrostatically attaching) to each other and the distance between the resin powder particles is adjusted, making it possible to suppress an electrostatic attaching force (cohesive force).

When the ratio at which the external additive is attached on the resin powder is 0.15 or greater but 0.85 or less, the external additive can be suppressed from being detached from the resin powder particles even when the resin powder is heated to about the melting point of the resin, making it possible to ensure a desired performance of the resin powder even through repeated use of the resin powder that has been once heated. For example, when the resin powder is used for production of a three-dimensional object, any resin powder particles that have not been used for constituting an object among the resin powder particles used for production of the object can be repeatedly used for object production (recyclability).

When the ratio at which the external additive is attached on the resin powder is 0.85 or greater, the external additive is more likely to be buried into the resin powder. When the ratio at which the external additive is attached on the resin powder is 0.15 or less, the external additive is more likely to be detached from the resin powder, leading to fluidity degradation.

The ratio at which the external additive is attached on the resin powder expresses by what strength the external additive is attached on the resin powder, and is measured by the method described below. The ratio at which the external additive is attached on the resin powder is closer to 1 as the strength is higher, and closer to 0 as the strength is lower.

[Method for measuring the ratio at which external additive is attached]

The resin powder mixed with the external additive (external additive-attached resin powder, hereinafter may also be referred to as powder sample) (3 g) and a 0.5% by mass sodium dodecyl sulfate aqueous solution (40 g) are mixed and stirred in a 100 mL plastic cup, to prepare a powder sample-containing aqueous solution.

Next, using an ultrasonic irradiator (apparatus name: VCX-750, available from Sonics & Materials, Inc.), ultrasonic energy adjusted in a manner that a vibration indicating value indicated by an ammeter attached to the apparatus becomes 60 W is applied to the prepared powder sample-containing aqueous solution for three minutes.

Next, the ultrasonically treated powder sample-containing aqueous solution is filtrated through a filter having a mesh size of 5 micrometers (product name: KIRIYAMA FILTER PAPER, available from Kiriyama Glass Co.), and the obtained powder sample is washed with pure water (60 ml).

The washed powder sample is dried at 80 degrees C for five hours, and the weight of the dried powder sample (dry weight after treatment) is measured.

The ratio at which the external additive is attached is calculated according to the formula described below.

$$\text{Ratio at which external additive is attached} = \{3 \ (\text{g}) - (\text{dry weight after treatment} \ (\text{g}))\}/3 \ (\text{g})$$

The content of the external additive is preferably 0.398% by mass or greater but 4.76% by mass or less and more preferably 0.498% by mass or greater but 2.91% by mass or less relative to the total amount of the resin powder.

<Other materials>

The other materials are not particularly limited and may be appropriately selected depending on the intended purpose. Examples of the other materials include an antistatic agent, a reinforcer, a flame retardant, a plasticizer, a stabilizer, an antioxidant, and a crystal nucleating agent. One of these materials may be used alone or two or more of these materials may be used in combination. These materials may be mixed with the polyolefin-based resin to be internally present in the resin powder, or may be attached on the surface of the resin powder.

The antistatic agent is not particularly limited and may be appropriately selected depending on the intended purpose. Examples of the antistatic agent include a water-insoluble antistatic agent.

Examples of the water-insoluble antistatic agent include a high-molecular-weight antistatic agent and a low-molecular-weight antistatic agent.

Examples of the high-molecular-weight antistatic agent include (ADEKA, AS-301E), PELECTRON PVL available from Sanyo Chemical Industries, Ltd., and PELESTAT 230 available from Sanyo Chemical Industries, Ltd.

Examples of the low-molecular-weight antistatic agent include a boron-based complex (available from Japan Carlit Co., Ltd., LR-147), carbon black, carbon nanotube, and fullerenes.

These antistatic agents not only have a high resistance adjusting ability, but do not easily bleed out during processing and are not easily exposed to the surface of particles. Therefore, these antistatic agents have a characteristic of being uninfluential to fluidity due to the external environment at normal temperature or high temperatures.

The content of the antistatic agent is not particularly limited and may be appropriately selected depending on the intended purpose.

The reinforcer is added mainly for enhancing the strength, and is added as a filler or a packing material. Examples of the reinforcer include glass fillers, glass beads, carbon fiber, aluminum balls, and the reinforcers described in International Publication No. WO 2008/057844. One of these reinforcers may be used alone or two or more of these reinforcers may be used in combination. The reinforcer may be contained in the resin powder (particles). The resin powder of the present disclosure is preferably appropriately dry, or may be dried before use using a vacuum drier or with addition of silica gel.

«Flame retardant»

As the flame retardant, for example, halogen-based and phosphorus-based flame retardants that are commonly used as flame retardants for polyolefin may be used when the flame retardant is an organic flame retardant. Examples of the halogen-based flame retardants include bisphenol halide-based compounds and bisphenol-bis(alkyl ether) halide-based compounds.

«Antioxidant»

Examples of the antioxidant include hydrazide-based and amide-based antioxidants serving as metal deactivators, phenol-based (hindered phenol-based) and amine-based antioxidants serving as radical scavengers, phosphate-

8

based and sulfur-phased antioxidants serving as peroxide decomposers, and triazine-based antioxidants serving as ultraviolet absorbents. One of these antioxidants may be used alone or two or more of these antioxidants may be used in combination. Particularly, combined use of radical scavengers and peroxide decomposers is known to be effective, and is particularly effective in the present disclosure.

The content of the antioxidant is preferably 0.05% by mass or greater but 5% by mass or less, more preferably 0.1% by mass or greater but 3% by mass or less, and particularly preferably 0.2% by mass or greater but 2% by mass or less relative to the total amount of the resin powder. When the content of the antioxidant is 0.05% by mass or greater but 5% by mass or less relative to the total amount of the resin powder, an effect of preventing thermal degradation of the resin powder is obtained, and the resin powder that has been used for object production can be recycled when the resin powder is used for production of a three-dimensional object. An effect of preventing discoloration due to heat is also obtained.

«Crystal nucleating agent»

Examples of the crystal nucleating agent include inorganic substances such as talc, metal salts of aromatic carboxylic acid, metal salts of aromatic phosphoric acid, sorbitol-based derivatives, and metal salts of rosin. Preferable examples of the crystal nucleating agent include AL salt of p-t-butyl-benzoate, sodium benzoate, 2,2'-methylene bis(4,6-di-t-butylphenyl) sodium phosphate, 1,2,3,4-dibenzylidene sorbitol, 1,2,3,4-bis(paramethyl benzylidene)sorbitol, 1,2,3,4-bis(paraethyl benzylidene)sorbitol, 1,2,3,4-bis(parachlorobenzylidene)sorbitol, and metal salts (lithium, sodium, potassium, and magnesium salts) of rosin.

[Method for producing resin powder]

A method for producing a resin powder of the present disclosure is not particularly limited and may be appropriately selected depending on the intended purpose, and examples of the method include a method including a step employing a melting kneading method, a method including a step employing a freeze grinding method, a method of drawing a resin into a fibrous shape using an extruder and cutting the fibrous resin, and a polymerization method. Among these methods, the method including a step employing a melting kneading method, and a method including a step employing a freeze grinding method are preferable. In the present disclosure, the method including a step employing a melting kneading method and the method including a step employing a freeze grinding method will be described. However, the method for producing a resin powder of the present disclosure is not limited to these methods.

First, the method including a step employing a melting kneading method will be described.

In the melting kneading method, the polyolefin-based resin and a water-soluble resin are mixed, then kneaded using an extruder kneader, then rolled and cooled, and then coarsely ground. The obtained coarsely ground product is washed with water to wash away only the water-soluble resin and extract the resin needed.

The water-soluble resin needs to have a viscosity of a certain level not only when dissolved in water but also when kneaded at a high temperature.

Examples of the water-soluble resin include resole-type phenol resins, methylolized urea (urea) resins, methylolized melamine resins, polyvinyl alcohols, polyethylene glycol, polyethylene oxides, polyacrylamides, and carboxymethyl cellulose (CMC).

Examples of the unit configured to mix the polyolefin-based resin and the water-soluble resin include a mixer. The mixer is not particularly limited and may be appropriately selected depending on the intended purpose so long as the mixer can mix the resins. Examples of the mixer that can perform stirring at a high speed include a Henschel mixer, a super mixer, and a mechanohybrid.

The extruder kneader is not particularly limited and may be appropriately selected depending on the intended purpose. Examples of the extruder kneader include a uniaxial kneader, a biaxial kneader, two rolls, and three rolls. In order to obtain a small particle diameter and a narrow distribution, there is a need for selecting a device that can perform high-speed dispersion.

Examples of the device that can perform high-speed dispersion include a KNEADEX kneader available from Nippon Coke & Engineering Co., Ltd.

For post treatment, the kneaded mixture is coarsely ground after rolled and cooled.

Examples of the rolling cooling device include a drum cooler available from Nippon Coke & Engineering Co., Ltd.

The coarse grinder is not particularly limited and may be appropriately selected depending on the intended purpose so long as the obtained kneaded product can be coarsely ground to chips having a size of about 2 mm. Examples of the coarse grinder include RHOTOPLEX, a hammer mill, a feather mill, and a cutter mill.

Next, the obtained coarsely ground products are washed with water.

Subsequently, the water-soluble resin and the polyolefin-based resin powder are subjected to solid-liquid separation by filtration. The sample on the filter paper is collected and dried on a fluid bed for 48 hours. In this way, the resin powder can be obtained.

The resin powder produced by the method including a step employing a melting kneading method can have an average circularity of 0.70 or greater. A resin powder having a narrow particle size distribution can be produced through a smaller number of steps.

Next, the method including a step employing a freeze grinding method will be described.

Examples of the freeze grinding method include a method of freezing a resin material in the form of, for example, pellets, and grinding the frozen resin material to obtain a resin powder.

It is preferable to perform the method of grinding the resin material at, for example, a low temperature lower than or equal to 0 degrees C (lower than or equal to the brittleness temperature of each resin) using, for example, liquid nitrogen, more preferably at -25 degrees C or lower, and yet more preferably at an ultralow temperature lower than or equal to -100 degrees C. Grinding is performed taking advantage of resin brittleness at a low temperature.

The method for grinding the frozen resin material is not particularly limited and may be appropriately selected depending on the intended purpose. Examples of the method include a method of using, for example, a pinned mill, a counter jet mill, and a baffle plate impact mill at room temperature.

The ground resin material is classified by, for example, filtration of particles having particle diameters other than the intended particle diameter through a filter.

For classification, for example, a mesh having an appropriately selected mesh size is used to remove coarse particles and minute particles. During grinding, the particle diameter intended to be obtained by grinding may be appropriately adjusted to enable particle diameter adjustment.

Before or after grinding, annealing for maintaining the resin at a temperature lower than the melting point by from 10 degrees C through 15 degrees C for 24 hours or longer may be performed in order to control crystallization.

It is preferable to perform a spheronizing step after grinding in order to round a squared corner. Examples of the spheronizing method include a method using a solvent for dissolving the resin, and a method of spheronizing the resin using, for example, a stirrer while heating the resin.

(Resin powder for producing three-dimensional object)

A resin powder for producing a three-dimensional object contains first particles containing a polyolefin-based resin. The surfaces of the first particles are coated with second particles at an average coating ratio of 0.15 or greater, where the average coating ratio is measured with a Material Development Kit (MDK) at a temperature lower than the melting point of the resin powder for producing three-dimensional object by 15 degrees C. The resin powder for producing a three-dimensional object further contains other components as needed.

The resin powder for producing a three-dimensional object of the present disclosure is the same as the resin powder of the present disclosure.

The resin powder for producing a three-dimensional object of the present disclosure can be used in SLS method and SMS method, and has properties that appropriately balance parameters such as particle size, particle size distribution, heat transfer property, melt viscosity, bulk density, fluidity, melting temperature, and recrystallization temperature.

The resin powder for producing a three-dimensional object of the present disclosure is effective for production of a three-dimensional object using a laser sintering method by a PBF method such as a selective laser sintering (SLS) method or a selective mask sintering (SMS) method.

The resin powder for producing a three-dimensional object of the present disclosure is excellent in fluidity and handleability (recoatability). Using the resin powder for producing a three-dimensional object of the present disclosure, it is possible to obtain a three-dimensional object having a high dimensional accuracy, a high strength, and an excellent surface property (orange peel property).

(Method for producing resin powder for producing three-dimensional object)

A method for producing a resin powder for producing a three-dimensional object is the same as the method for producing a resin powder of the present disclosure.

(Three-dimensional object producing method and three-dimensional object producing apparatus)

A three-dimensional object producing method of the present disclosure repeats a layer forming step of forming a layer containing the resin powder for producing a three-dimensional object of the present disclosure and a powder bonding step of mutually bonding the particles of the resin powder for producing a three-dimensional object in a selected region of the layer formed, and further includes other steps as needed.

A three-dimensional object producing apparatus of the present disclosure includes a layer forming unit configured to form a layer containing the resin powder for producing a three-dimensional object of the present disclosure, and a powder bonding unit configured to mutually bond the particles of the resin powder for producing a three-dimensional object in a selected region of the layer formed, and further includes other units as needed.

As the resin powder for producing a three-dimensional object, the resin powder of the present disclosure may also be used.

The resin powder for producing a three-dimensional object can be used in and is effective for all kinds of three-dimensional object producing apparatuses of a powder bed additive manufacturing type. Three-dimensional object producing apparatuses of a powder bed additive manufacturing type are varied in the unit configured to, after a layer of a powder is formed, mutually bond the particles of the resin powder for producing a three-dimensional object in a selected region of the layer of the powder, and examples of the unit generally include an electromagnetic irradiating unit represented by SLS method and SMS method, and a liquid discharging unit represented by binder jet method. The resin powder for producing a three-dimensional object of the present disclosure can be applied to any of these methods, and is effective for all three-dimensional object producing apparatuses that include a unit configured to additively manufacture layers of a powder.

"Bonding" means maintaining a state of one substance contacting another substance at the interface between the substances.

The powder bonding unit is not particularly limited and may be appropriately selected depending on the intended purpose. Examples of the powder bonding unit include a unit configured to emit electromagnetic waves.

Examples of the electromagnetic irradiation source used for electromagnetic irradiation in a three-dimensional object producing apparatus of SLS type and SMS type employing electromagnetic irradiation include lasers configured to emit ultraviolet rays, visible light rays, and infrared rays, microwaves, discharge, electron beams, radiation heaters, LED lamps, and combinations thereof.

When employing electromagnetic irradiation as a method for selectively bonding particles of the resin powder for producing a three-dimensional object, it is optional to promote efficient absorption of electromagnetic waves or inhibit absorption of electromagnetic waves. For example, an absorbent or an inhibitor may be added in the resin powder for producing a three-dimensional object.

A three-dimensional object formed by laser sintering of the resin powder for producing a three-dimensional object is smooth and has a surface having a sufficient resolution that is lower than or equal to the minimum orange peel.

The orange peel generally refers to surface defects present in the surface of a three-dimensional object formed by laser sintering by PBF, such as an inappropriate coarse surface, voids, or distortion.

For example, the voids not only spoil the appearance, but also may significantly affect the mechanical strength.

It is preferable that a three-dimensional object formed by laser sintering of the resin powder for producing a three-dimensional object not exhibit inappropriate process properties such as warpage, distortion, and fuming due to phase change that occurs during cooling performed from the middle of sintering until after sintering.

Using the resin powder for producing a three-dimensional object of the present disclosure, it is possible to obtain a three-dimensional object having a high dimensional stability and a high strength and excellent in surface property (orange peel property).

The resin powder for producing a three-dimensional object of the present disclosure further has an excellent recyclability, and it is possible to suppress degradation of dimensional stability and strength of a three-dimensional object even if excessive powder is used repeatedly to form the three-dimensional object.

Recycled powder used in the present disclosure can form a 150 mm-long multipurpose dog bone-like test specimen that is compliant with International Organization for Standardization (ISO) 3167 Type 1A and that will not have any of an inappropriate coarse surface, voids, and distortion on the surface thereof even when the recycled powder has been tested according to a recycling testing method described below at least once, more preferably five times, yet more preferably seven times, and particularly preferably at least ten times in a PBF type producing apparatus (available from Ricoh Company, Ltd., AM S5500P).

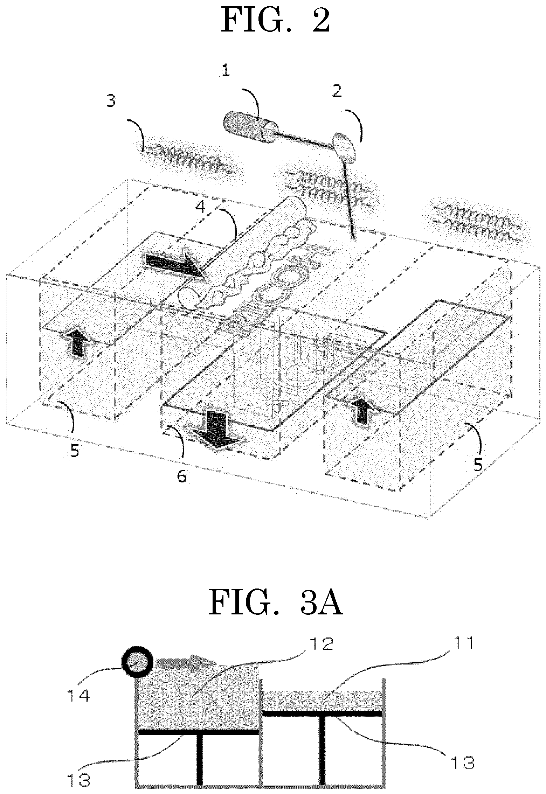

Next, an example of the three-dimensional object producing apparatus will be described with reference to FIG. 2. FIG. 2 is a schematic view illustrating an example of the three-dimensional object producing apparatus. As illustrated in FIG. 2, a powder is stored in a powder supplying tank 5, and a roller 4 supplies the powder to a laser scanning space 6 in accordance with the amount of powder to be used. It is preferable that the supplying tank 5 be temperature-adjusted by a heater 3. Via a reflection mirror 2, the laser scanning space 6 is irradiated with a laser output by an electromagnetic irradiation source 1. A three-dimensional object can be obtained through sintering of the powder by the heat of the laser.

The temperature of the supplying tank 5 is preferably lower than the melting point of the powder by 10 degrees C or more.

The parts bed temperature in the laser scanning space is preferably a temperature lower than the melting point of the powder by 5 degrees C or more.

The laser output power is not particularly limited, may be appropriately selected depending on the intended purpose, and is preferably 10 watts or higher but 150 watts or lower.

In another embodiment, a three-dimensional object of the present disclosure can be produced using a selective mask sintering (SMS) technique. For example, the SMS process described in, for example, U.S. Patent No. 6,531,086 can be suitably employed.

In the SMS process, a shielding mask is used to selectively shield infrared radiation and selectively irradiate a part of a powder layer with infrared rays. When employing the SMS process in order to produce a three-dimensional object using the resin powder for producing a three-dimensional object of the present disclosure, it is possible and effective to add a material that enhances the infrared absorbing property of the resin powder for producing a three-dimensional object in the resin powder for producing a three-dimensional object. For example, the resin powder for producing a three-dimensional object may contain one or more kinds selected from heat absorbents and dark materials (e.g., carbon fiber, carbon black, carbon nanotube, or carbon fiber, and cellulose nanofiber).

In yet another embodiment, a three-dimensional object can be produced using the resin powder for producing a three-dimensional object of the present disclosure and a three-dimensional object producing apparatus of the binder jet type described above. This method repeats a layer forming step of forming a layer formed of the resin powder for producing a three-dimensional object of the present disclosure, and a powder bonding step of discharging a liquid to a selected region of the layer formed and drying the liquid to mutually bond particles of the resin powder for producing a three-dimensional object, and further includes other steps as needed.

The three-dimensional object producing apparatus of the present disclosure includes a layer forming unit configured to form a layer formed of the resin powder for producing a three-dimensional object of the present disclosure, and a unit configured to discharge a liquid to a selected region of the layer formed, and further includes other units as needed. It is preferable that the unit configured to discharge a liquid employ an inkjet method in terms of dimensional accuracy of a three-dimensional object to be obtained and object production speed.

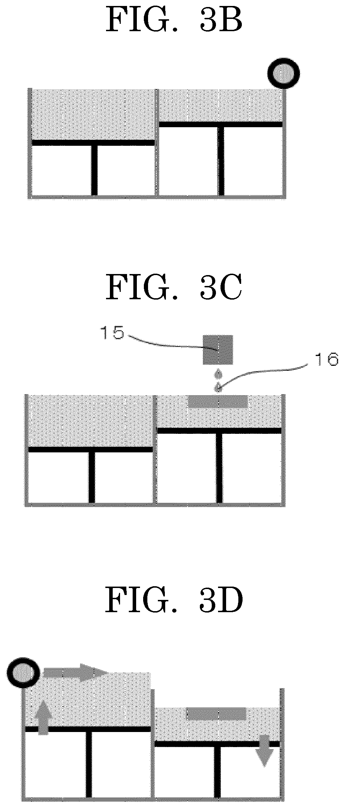

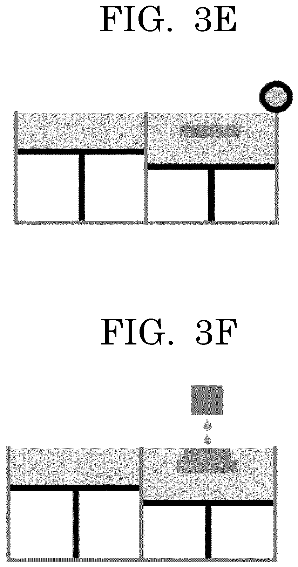

FIG. 3 illustrates an example of a schematic view of a binder jet process. The three-dimensional object producing apparatus illustrated in FIG. 3 includes a power storing tank 11 for forming and a powder storing tank 12 for supplying. These powder storing tanks include stages 13 movable in the vertical direction respectively. The resin powder for producing a three-dimensional object of the present disclosure is placed over the stages 13, to form a layer formed of the resin powder for producing a three-dimensional object. Above the powder storing tank 11 for forming, the three-dimensional object producing apparatus includes a three-dimensional object producing liquid material supplying unit 15 configured to discharge a liquid material 16 for producing a three-dimensional object to the resin powder for producing a three-dimensional object in the powder storing tank 11. The three-dimensional object producing apparatus also includes a layer forming unit 14 (hereinafter may also be referred to as leveling mechanism or recoater) that can supply the resin powder for producing a three-dimensional object from the powder storing tank 12 for supplying to the powder storing tank 11 for forming while leveling the surface of (a layer) of the resin powder for producing a three-dimensional object in the powder storing tank 11 for forming.

FIG. 3A and FIG 3B illustrate a step of supplying the resin powder for producing a three-dimensional object from the powder storing tank 12 for supplying to the powder storing tank 11 for forming while forming a resin powder layer having a smooth surface. The stages 13 of the powder storing tank 11 for forming and the powder storing tank 12 for supplying are controlled in a manner that the gap between the stages is adjusted so that a desired layer thickness may be obtained, and the layer forming unit 14 is moved from the powder storing tank 12 for supplying to the powder storing tank 11 for forming, to form a resin powder layer in the powder storing tank 11 for forming.

FIG. 3C illustrates a step of dropping the liquid material 16 for producing a three-dimensional object to a resin powder layer in the powder storing tank 11 for forming, using the three-dimensional object producing liquid material supplying unit 15. Here, the position to which the liquid material 16 for producing a three-dimensional object is dropped in the resin powder layer is determined based on two-dimensional image data (slice data) representing a number of planes obtained by slicing a three-dimensional object.

In FIG. 3D and FIG. 3E, the stage 13 of the powder storing tank 12 for supplying is moved upward and the stage 13 of the powder storing tank 11 for forming is moved downward to control the gap between the stages 13 in a manner to obtain a desired layer thickness, and the layer forming unit 14 is again moved from the powder storing tank 12 for supplying to the powder storing tank 11 for forming, to newly form a resin powder layer in the powder storing tank 11 for forming.

FIG. 3F illustrates a step of again dropping the liquid material 16 for producing a three-dimensional object to the resin powder layer in the powder storing tank 11 for forming, using the three-dimensional object producing liquid material supplying unit 15. These series of steps are repeated, the resultant is dried as needed, and the resin powder for producing a three-dimensional object to which the liquid material for producing a three-dimensional object is not applied (excessive powder) is removed. In this way, a three-dimensional object can be obtained.

In order to mutually bond particles of the resin powder for producing a three-dimensional object, it is preferable to use an adhesive. The adhesive may be added in a dissolved state in the liquid to be discharged, or may be mixed as adhesive particles in the resin powder for producing a three-dimensional object. It is preferable to dissolve the adhesive in the liquid to be discharged. For example, when the liquid to be discharged contains water as a main component, a water-soluble adhesive is preferable.

Examples of the water-soluble adhesive include polyvinyl alcohol (PVA), polyvinyl pyrrolidone, polyamide, polyacrylamide, polyethyleneimine, polyethylene oxide, polyacrylic acid resins, cellulose resins, and gelatin. Among these water-soluble adhesives, polyvinyl alcohol is preferred in order to enhance the strength and dimensional accuracy of a three-dimensional object.

The resin powder for producing a three-dimensional object of the present disclosure has a high fluidity, and can consequently improve the surface property of a three-dimensional object to be produced. Such effects are not limited to methods that employ electromagnetic irradiation, but can be achieved in all three-dimensional object producing apparatuses employing the powder bed additive manufacturing methods represented by binder jet methods.

EXAMPLES

The present disclosure will be described below by way of Examples. The present disclosure should not be construed as being limited to these Examples.

(Example 1)

J704UG (obtained from Prime Polymer Co., Ltd.) (100 parts by mass) serving as a block copolymerized polypropylene resin and polyethylene oxide (ALKOX E-75, obtained from Meisei Chemical Works, Ltd.) (400 parts by mass) serving as a water-soluble resin were mixed with each other, and stirred and mixed at a stirring speed of 30 m/s for five minutes, to obtain a sample.

The obtained sample were melted and kneaded using a biaxial extruder kneader (TEM-18SS, obtained from Toshiba Machine Co., Ltd.). As the kneading conditions, the temperature of the head at the leading end was set to 200 degrees C, and the screw rotation speed was set to 500 rpm.

The melted kneaded sample was rolled and cooled, and coarsely ground with a cutter mill, to obtain coarsely ground products. The obtained coarsely ground products were washed with ion-exchanged water to remove only polyethylene oxide, to obtain a block copolymerized polypropylene resin powder 1.

The obtained block copolymerized polypropylene resin powder 1 (100 parts by mass) and silica (product name; SO-C4, obtained from Admatex Co., Ltd.) (5 parts by mass) serving as an external additive were stirred and mixed using a Henschel mixer (obtained from Mitsui Mining Co., Ltd.) at a stirring speed of 30 m/s for five minutes, to obtain a resin powder 1.

(Examples 2 to 30 and Comparative Examples 1 to 15)

Resin powders 2 to 45 were obtained in the same manner as in Example 1, except that unlike in Example 1, the production conditions were changed to as presented in Table 1 to Table 4. In Example 17 and Comparative Example 9, resin powders were produced by a freeze grinding method. The conditions of the freeze grinding method are as described below.

[Production conditions of freeze grinding method]

- Apparatus: LINREX mill (registered trademark) LX obtained from Hosokawa Micron Corporation
- Freezing temperature: temperature at the grinding outlet: from -100 degrees C through -120 degrees C
- Stirring speed: 80.0 m/s

After grinding, sieving through a mesh size of 106 micrometers was performed using a blow through-type high-performance sieving machine HI-BOLTER (HIB) obtained from Toyo Hitec Co., Ltd., to obtain particles having an arbitrary particle diameter.

The number average particle diameter $Dn_B$ of the external additive used was measured with a SEM.

<Number average particle diameter DnB>

The resin powder to which the external additive was added was dispersed over a carbon tape and sputtered with, for example, Au, Pt, Pt-Pd, and Os to about 5 nm, and a SEM image of the resin powder to which the external additive was wadded was captured using a field-emission scanning electron microscope MERILIN (obtained from SII Nano Technology Inc.). After the image was captured, the maximum length of each particle was measured by image analysis. An average of two hundred particles was calculated as the number average particle diameter. An example of the SEM measuring conditions are presented below.

[SEM measuring conditions]

**[0166]** - Accelerating voltage: 2.0 kV
- WD (Working Distance): 10.0 mm
- Observation magnification: An external additive particle having a particle diameter of 1.0 micrometer or greater was measured at a magnification of $\times$ 5,000, and an external additive particle having a particle diameter of less than 1.0 micrometer was measured at a magnification of $\times$ 10,000.

Table 1-1

| | | Resin | | | Second particles (external additive) | | | | | |
|---|---|---|---|---|---|---|---|---|---|---|
| | | Kind | Manufacturer | Resin name | Organic /inorganic | Material name | Manufacturer | Product name | Number average particle diameter $Dn_B$ (micrometer) | Addition amount (part by mass) |
| Ex. | 1 | Block polypropylene | Prime Polymer Co., Ltd. | J704UG | Inorganic | Silica | Admatex Co., Ltd. | SO-C4 | 1.1 | 5.0 |
| | 2 | Block polypropylene | Prime Polymer Co., Ltd. | J704UG | Inorganic | Silica | Admatex Co., Ltd. | SO-C4 | 1.1 | 3.0 |
| | 3 | Block polypropylene | Prime Polymer Co., Ltd. | J704UG | Inorganic | Silica | Admatex Co., Ltd. | SO-C4 | 1.1 | 1.0 |
| | 4 | Block polypropylene | Prime Polymer Co., Ltd. | J704UG | Inorganic | Silica | Admatex Co., Ltd. | SO-C4 | 1.1 | 0.50 |
| | 5 | Block polypropylene | Prime Polymer Co., Ltd. | J704UG | Inorganic | Silica | Admatex Co., Ltd. | SO-C5 | 1.5 | 1.0 |
| | 6 | Block polypropylene | Prime Polymer Co., Ltd. | J704UG | Inorganic | Silica | Nippon Shokubai Co., Ltd. | KE-S S150 | 1.5 | 1.0 |
| | 7 | Block polypropylene | Prime Polymer Co., Ltd. | J704UG | Inorganic | Silica | Admatex Co., Ltd. | SO-C6 | 2.1 | 1.0 |
| | 8 | Block polypropylene | Prime Polymer Co., Ltd. | J704UG | Inorganic | Silica | Nippon Shokubai Co., Ltd. | KE-S S250 | 2.5 | 5.0 |
| | 9 | Block polypropylene | Prime Polymer Co., Ltd. | J704UG | Inorganic | Silica | Nippon Shokubai Co., Ltd. | KE-S S250 | 2.5 | 0.50 |
| | 10 | Block polypropylene | Prime Polymer Co., Ltd. | J704UG | Inorganic | Silica | Admatex Co., Ltd. | SO-C4 | 1.1 | 1.0 |
| | 11 | Block polypropylene | Prime Polymer Co., Ltd. | J704UG | Inorganic | Silica | Admatex Co., Ltd. | SO-C4 | 1.1 | 1.0 |
| | 12 | Block polypropylene | Prime Polymer Co., Ltd. | J704UG | Inorganic | Silica | Admatex Co., Ltd. | SO-C4 | 1.1 | 1.0 |
| | 13 | Block polypropylene | Prime Polymer Co., Ltd. | J704UG | Inorganic | Alumina | Sumitomo Chemical Co., Ltd. | AA 1.5 | 1.5 | 1.0 |

| | | Resin | | | Second particles (external additive) | | | | | |
|---|---|---|---|---|---|---|---|---|---|---|
| | | Kind | Manufacturer | Resin name | Organic /inorganic | Material name | Manufacturer | Product name | Number average particle diameter $Dn_B$ (micrometer) | Addition amount (part by mass) |
| | 14 | Block polypropylene | Prime Polymer Co., Ltd. | J704UG | Inorganic | Silica | Admatex Co., Ltd. | SO-C4 | 1.1 | 0.40 |
| | 15 | Block polypropylene | Prime Polymer Co., Ltd. | J704UG | Inorganic | Silica | Admatex Co., Ltd. | SO-C4 | 1.1 | 1.0 |
| | 16 | Block polypropylene | Prime Polymer Co., Ltd. | J704UG | Inorganic | Silica | Admatex Co., Ltd. | SO-C4 | 1.1 | 1.0 |
| | 17 | Block polypropylene | Prime Polymer Co., Ltd. | J704UG | Inorganic | Silica | Admatex Co., Ltd. | SO-C4 | 1.1 | 1.0 |
| | 18 | Block polypropylene | Prime Polymer Co., Ltd. | J704UG | Organic | Styrene resin | Soken Chemical & Engineering Co., Ltd. | SX-130H | 1.3 | 5.0 |

EP 3 885 141 A1

Table 1-2

| | | Resin | | | Second particles (external additive) | | | | | |
|---|---|---|---|---|---|---|---|---|---|---|
| | | Kind | Manufacturer | Resin name | Organic /inorganic | Material name | Manufacturer | Product name | Number average particle diameter $Dn_B$ (micrometer) | Addition amount (part by mass) |
| Ex. | 19 | Block polypropylene | Prime Polymer Co., Ltd. | J704UG | Organic | Styrene resin | Soken Chemical & Engineering Co., Ltd. | SX-130H | 1.3 | 3.0 |
| | 20 | Block polypropylene | Prime Polymer Co., Ltd. | J704UG | Organic | Styrene resin | Soken Chemical & Engineering Co., Ltd. | SX-130H | 1.3 | 1.0 |
| | 21 | Block polypropylene | Prime Polymer Co., Ltd. | J704UG | Organic | Styrene resin | Soken Chemical & Engineering Co., Ltd. | SX-130H | 1.3 | 0.50 |
| | 22 | Block polypropylene | Prime Polymer Co., Ltd. | J704UG | Organic | Acrylic resin | Soken Chemical & Engineering Co., Ltd. | MX-150 | 1.5 | 1.0 |
| | 23 | Block polypropylene | Prime Polymer Co., Ltd. | J704UG | Organic | Acrylic resin | Soken Chemical & Engineering Co., Ltd. | MX-300 | 3.0 | 1.0 |
| | 24 | Block polypropylene | Prime Polymer Co., Ltd. | J704UC, | Organic | Acrylic resin | NipponPaint Co., Ltd. | MG351 | 1.0 | 1.0 |
| | 25 | Block polypropylene | Prime Polymer Co., Ltd. | J704UG | Organic | Acrylic resin | Soken Chemical & Engineering Co., Ltd. | MX-300 | 3.0 | 1.0 |
| | 26 | Block polypropylene | Prime Polymer Co., Ltd. | J704UG | Organic | Acrylic resin | Soken Chemical & Engineering Co., Ltd. | MX-300 | 3.0 | 0.50 |
| | 27 | Random polypropylene | Prime Polymer Co., Ltd. | B221WC | Inorganic | Silica | Admatex Co., Ltd. | SO-C4 | 1.1 | 1.00 |

(continued)

| | | Resin | | Second particles (external additive) | | | | | |
|---|---|---|---|---|---|---|---|---|---|
| | Kind | Manufacturer | Resin name | Organic /inorganic | Material name | Manufacturer | Product name | Number average particle diameter $Dn_B$ (micrometer) | Addition amount (part by mass) |
| 28 | Block polypropylene | Prime Polymer Co., Ltd. | J704UG | Inorganic | Silica | Admatex Co., Ltd. | SO-C4 | 1.1 | 1.00 |
| 29 | Block polypropylene | Prime Polymer Co., Ltd. | J704UG | Inorganic | Silica | Admatex Co., Ltd. | SO-C5 | 1.5 | 5.00 |
| 30 | Block polypropylene | Prime Polymer Co., Ltd. | J704UG | Inorganic | Silica | Admatex Co., Ltd. | SO-C4 | 1.1 | 0.50 |

Table 2

| | | Resin | | | Second particles (external additive) | | | | | |
|---|---|---|---|---|---|---|---|---|---|---|
| | | Kind | Manufacturer | Resin name | Organic /inorganic | Material name | Manufacturer | Product name | Number average particle diameter $Dn_B$ (micrometer) | Addition amount (part by mass) |
| | 1 | Block polypropylene | Prime Polymer Co., Ltd. | J704UG | Inorganic | Silica | Admatex Co., Ltd. | SO-C1 | 0.30 | 0.50 |
| | 2 | Block polypropylene | Prime Polymer Co., Ltd. | J705UG | Inorganic | Silica | Admatex Co., Ltd. | SO-C1 | 0.30 | 1.0 |
| | 3 | Block polypropylene | Prime Polymer Co., Ltd. | J 704UG | Inorganic | Silica | Admatex Co., Ltd. | SO-C1 | 0.30 | 5.0 |
| | 4 | Random polypropylene | Polyplastics Co., Ltd. Japan | WXK1233 | Inorganic | Silica | Admatex Co., Ltd. | SO-C1 | 0.30 | 0.50 |
| | 5 | Random polypropylene | Polyplastics Co., Ltd. Japan | WXK1233 | Inorganic | Silica | Admatex Co., Ltd. | SO-C1 | 0.30 | 5.5 |
| | 6 | Block polypropylene | Prime Polymer Co., Ltd. | J704UG | Inorganic | Silica | Nippon AEROSIL CO., LTD. | RY-51 | 0.040 | 1.0 |
| | 7 | Block polypropylene | Prime Polymer Co., Ltd. | J704UG | Inorganic | Silica | Admatex Co., Ltd. | SO-C 4 | 1.1 | 1.0 |
| | 8 | Block polypropylene | Prime Polymer Co., Ltd. | J704UG | Inorganic | Silica | Admatex Co., Ltd. | SO-C 4 | 1.1 | 1.0 |
| | 9 | Block polypropylene | Prime Polymer Co., Ltd. | J704UG | Inorganic | Silica | Admatex Co., Ltd. | SO-C 4 | 1.1 | 1.0 |

(continued)

| | | Resin | | | Second particles (external additive) | | | | | |
|---|---|---|---|---|---|---|---|---|---|---|
| | | Kind | Manufacturer | Resin name | Organic /inorganic | Material name | Manufacturer | Product name | Number average particle diameter $Dn_B$ (micrometer) | Addition amount (part by mass) |
| Comp. Ex. | 10 | Block polypropylene | Prime Polymer Co., Ltd. | J704UG | Inorganic | Silica | Admatex Co., Ltd. | SO-C 4 | 1.1 | 1.0 |
| | 11 | Block polypropylene | Prime Polymer Co., Ltd. | J704UG | Inorganic | Silica | Admatex Co., Ltd. | SO-C 4 | 1.1 | 1.0 |
| | 12 | Block polypropylene | Prime Polymer Co., Ltd. | J704UG | Organic | Styrene resin | Soken Chemical & Engineering Co., Ltd. | SX-350H | 3.5 | 1.0 |
| | 13 | Block polypropylene | Prime Polymer Co., Ltd. | J704UG | Organic | Styrene resin | Soken Chemical & Engineering Co., Ltd. | SX-350H | 3.5 | 5.0 |
| | 14 | Block polypropylene | Prime Polymer Co., Ltd. | J704UG | Organic | Benzoguanamine/me lamine/ formaldehyde condensate | Nippon Shokubai Co., Ltd. | EPOS TERM -30 | 3.1 | 1.0 |
| | 15 | Random polypropylene | Polyplastics Co., Ltd. Japan | WXK12 33 | Organic | Styrene resin | Soken Chemical & Engineering Co., Ltd. | SX-350H | 3.5 | 5.5 |

Table 3

| | | Producing method | | | | |
|---|---|---|---|---|---|---|
| | | Processing method | Kneading conditions | | Mixing conditions | |
| | | | Temp. (°C) of head at leading end | Screw rotation speed (rpm) | Stirring speed (m/sec) | Process time (second) |
| Ex. | 1 | Melting kneading | 200 | 500 | 35 | 300 |
| | 2 | Melting kneading | 200 | 500 | 35 | 300 |
| | 3 | Melting kneading | 200 | 500 | 35 | 300 |
| | 4 | Melting kneading | 200 | 500 | 35 | 300 |
| | 5 | Melting kneading | 200 | 500 | 35 | 300 |
| | 6 | Melting kneading | 200 | 500 | 35 | 300 |
| | 7 | Melting kneading | 200 | 500 | 35 | 300 |
| | 8 | Melting kneading | 200 | 500 | 35 | 300 |
| | 9 | Melting kneading | 200 | 500 | 35 | 300 |
| | 10 | Melting kneading | 200 | 250 | 35 | 300 |
| | 11 | Melting kneading | 200 | 300 | 35 | 300 |
| | 12 | Melting kneading | 200 | 300 | 35 | 300 |
| | 13 | Melting kneading | 200 | 500 | 35 | 300 |
| | 14 | Melting kneading | 200 | 500 | 35 | 300 |
| | 15 | Melting kneading | 200 | 500 | 15 | 300 |
| | 16 | Melting kneading | 200 | 500 | 50 | 300 |
| | 17 | Freeze grinding | - | - | 35 | 300 |
| | 18 | Melting kneading | 200 | 500 | 35 | 300 |
| | 19 | Melting kneading | 200 | 500 | 35 | 300 |
| | 20 | Melting kneading | 200 | 500 | 35 | 300 |
| | 21 | Melting kneading | 200 | 500 | 35 | 300 |
| | 22 | Melting kneading | 200 | 500 | 35 | 300 |
| | 23 | Melting kneading | 200 | 500 | 35 | 300 |
| | 24 | Melting kneading | 200 | 500 | 35 | 300 |
| | 25 | Melting kneading | 200 | 500 | 35 | 300 |
| | 26 | Melting kneading | 200 | 700 | 35 | 300 |
| | 27 | Melting kneading | 200 | 500 | 35 | 300 |
| | 28 | Melting kneading | 200 | 330 | 35 | 300 |
| | 29 | Melting kneading | 200 | 330 | 18 | 300 |
| | 30 | Melting kneading | 200 | 330 | 50 | 300 |

Table 4

| | | Producing method | | | | |
|---|---|---|---|---|---|---|
| | | Processing method | Kneading conditions | | Mixing conditions | |
| | | | Temp. (°C) of head at leading end | Screw rotation speed (rpm) | Stirring speed (m/sec) | Process time (second) |
| Comp. Ex. | 1 | Melting kneading | 200 | 500 | 35 | 300 |
| | 2 | Melting kneading | 200 | 500 | 35 | 300 |
| | 3 | Melting kneading | 200 | 500 | 35 | 300 |
| | 4 | Melting kneading | 200 | 500 | 35 | 300 |
| | 5 | Melting kneading | 200 | 500 | 35 | 300 |
| | 6 | Melting kneading | 200 | 500 | 35 | 300 |
| | 7 | Melting kneading | 200 | 800 | 35 | 300 |
| | 8 | Melting kneading | 200 | 200 | 35 | 300 |
| | 9 | Freeze grinding | - | - | 35 | 300 |
| | 10 | Melting kneading | 200 | 500 | 52 | 300 |
| | 11 | Melting kneading | 200 | 500 | 14 | 300 |
| | 12 | Melting kneading | 200 | 500 | 35 | 300 |
| | 13 | Melting kneading | 200 | 500 | 35 | 300 |
| | 14 | Melting kneading | 200 | 500 | 35 | 300 |
| | 15 | Melting kneading | 200 | 500 | 35 | 300 |

"Average circularity", "volume average particle diameter (Dv$_A$)", "melting point (degree C)", "average coating ratio", and "ratio at which external additive was attached" of the obtained resin powders 1 to 45 were measured in the manners described below. The results are presented in Table 5 and Table 6.

[Average circularity]

The circularity was measured using a wet flow-type particle diameter/shape analyzer (instrument name: FPIA-3000, obtained from Sysmex Corporation). The result is presented in Table 5 and Table 6.
The obtained resin powder was weighed out in 100 mg into a 100 mL beaker, a nonionic surfactant (NEUGEN ET-165 obtained from DKS Co., Ltd.) (4 mL) was dropped into the resultant and mixed well, and ion-exchanged water (70 mL) was further added to the resultant. The resultant was stirred for one minute using an ultrasonic washing device (BRANSON 2510J-MT with an ultrasonic output power of 125 W and an oscillation frequency of 42 kHz), and the average circularity of the resultant was measured using the wet flow-type particle diameter/shape analyzer.

[Volume average particle diameter ($Dv_A$)]

The volume average particle diameter ($Dv_A$) (micrometer) of the obtained resin powder was measured using a particle size distribution measuring instrument (obtained from MicrotracBel Corporation, MICROTRAC MT3000II) and a particle refractive index of each resin powder according to a dry (atmospheric) method without a solvent. As the particle refractive index of each resin powder, the refractive index of polypropylene was 1.48.

[Melting point (degree C)]

The melting point was measured according to a method described below using a differential scanning calorimeter ((DSC): TA-60S, obtained from Shimadzu Corporation).
Detailed conditions for measurement were compliant with JIS K-7121-1987 "Testing Methods for Transition Temperatures of Plastics).
A sample was weighed out in 5±0.5 mg in an aluminum pan, heated from normal temperature to 200 degrees C at a heating rate of 10 degrees C/min in a nitrogen atmosphere, cooled to 0 degrees C, and then again heated to 200 degrees C under the same conditions. An endothermic peak in this first measurement was employed as the melting point (degree C).

[Average coating ratio]

The average coating ratio was measured using MATERIAL DEVELOPMENT KIT SPREADER TESTER (measuring instrument) obtained from Sigma Designs, Inc. and MATERIAL DEVELOPMENT KIT OPTICAL VISION SYSTEM obtained from Sigma Designs, Inc.
As illustrated in FIG. 4B, a mold (or a frame, Sample Coupon-pocket depth=0.2 mm) having a hole having a width of 2.5 cm and a length of 3.0 cm was put on the heating unit 101 of the measuring instrument 100, and the measuring target resin powder 121 (0.3 g) was densely packed in the hole of the mold. When densely packing the resin powder, a flat plate was slid against the rim of the container at an angle of 45 degrees with respect to the opening surface of the container, to remove the resin powder protruding upward from the depth of the hole of the mold. Subsequently, the mold was removed, to leave only the measuring target resin powder 121 on the heating unit 101 of the measuring instrument 100.
In this state, the setting temperature of the heating unit 101 of the measuring instrument 100 was set to a temperature lower than the melting point of the measuring target resin powder 121 by 15 degrees C, and the resin powder 121 was heated for 10 minutes.
Next, the roller (recoater) 103 was moved in the direction of the arrow of FIG. 4C while being rotated at a recoating speed of 3 inches per second (IPS) (= about 64 mm/s), to move the resin powder 121 to the measuring section 102. After the resin powder was moved, an image of the measuring section 102 was captured from right above the measuring section 102 as illustrated in FIG. 4D.
Next, using the MATERIAL DEVELOPMENT KIT OPTICAL VISION SYSTEM obtained from Sigma Designs, Inc., the area A of the measuring section 102 and an area B occupied by the resin powder 121 in the measuring section 102 were calculated from the captured image. For calculating the areas A and B, the captured image was measured by binarization of the captured image at a threshold THRESH of 163. A ratio (B/A) of the measured value of the area B occupied by the resin powder 121 in the measuring section 102 to the measured value of the area A of the measuring section 102 was calculated as the average coating ratio.

[Ratio at which second particles (external additive) was attached]

The resin powder (external additive-attached resin powder, hereinafter may also be referred to as powder sample) (3 g) and a 0.5% by mass sodium dodecyl sulfate aqueous solution (40 g) were mixed and stirred in a 100 mL plastic cup, to prepare a powder sample-containing aqueous solution.
Next, using an ultrasonic irradiator (apparatus name: VCX-750, obtained from Sonics & Materials, Inc.), ultrasonic energy adjusted in a manner that a vibration indicating value indicated by an ammeter attached to the apparatus would become 60 W was applied to the prepared powder sample-containing aqueous solution for three minutes.
Next, the ultrasonically treated powder sample-containing aqueous solution was filtrated through a filter having a mesh size of 5 micrometers (product name: KIRIYAMA FILTER PAPER, obtained from Koriyama Glass Co.), and the obtained powder sample was washed with pure water (60 ml).
The washed powder sample was dried at 80 degrees C for five hours, and the weight of the dried powder sample (dry weight after treatment) was measured.
The ratio at which the external additive was attached was calculated according to the formula described below.

$$\text{Ratio at which external additive was attached} = \{3 \text{ (g)}-\text{(dry weight after treatment (g))}\}/3 \text{ (g)}$$

Three-dimensional objects 1 to 45 were produced in the manner described below under the conditions described below using the obtained resin powders 1 to 45.

-Production of three-dimensional object-

The obtained resin powder was stored for one week in an environment at a temperature of 27 degrees C and at a relative humidity of 80% RH. A three-dimensional object was produced using the resin powder after stored for one week and a SLS-type three-dimensional object producing apparatus (obtained from Ricoh Company, Ltd., AM S5500P).
As the object production conditions, the average thickness of a powder layer was set to 0.1 mm, the laser output power was set to 10 watts or higher but 150 watts or lower, the laser scanning space was set to 0.1 mm, and the bed temperature was set to a temperature lower than the melting point of the resin by 3 degrees C.
As the test piece to be produced as a three-dimensional object, five tensile test specimens were produced in the longer direction of the specimens in a manner that the longer side of the specimens extended in the Y axis direction.
The interval between the object forming layers was set to 5 mm.
As the tensile test specimen, a 150 mm-long multipurpose dog bone-like test specimen compliant with International Organization for Standardization (ISO) 3167 Type 1A (the center portion of the specimen having a length of 80 mm, a thickness of 4 mm, and a width of 10 mm) was produced.
The three-dimensional objects 1 to 45 obtained were evaluated in terms of "surface property (orange peel property)" and "tensile strength" in the manners described below. The results are presented in Table 5 and Table 6.

<Surface property (orange peel property)>

The surface of the test piece was observed visually, observed with an optical microscope, and sensorily tested. The sensory test was performed by touching on the sample with a hand to evaluate the surface property, smoothness in particular based on the feeling of touch. Obtained results were synthesized, and surface property (orange peel property) was evaluated according to the evaluation criteria described blow. The ratings "B" and "A" are non-problematic levels for practical use.

[Evaluation criteria]

A: The surface was extremely smooth, and almost no bothersome roughness or coarse surface was observed.
B: The surface smoothness was non-problematic, and roughness of the surface or coarse surface was tolerable.
D: The surface was scratchy, and many surface defects such as roughness and distortion were observed.

<Tensile strength>

The obtained three-dimensional object was tested using a tensile tester compliant with ISO 527 (obtained from Shimadzu Corporation, AGS-5KN). The test speed of the tensile test was 50 mm/minute.
The tensile strength test was performed at n=5, the maximum tensile stress point measured was determined as "tensile strength", and the maximum tensile strain point measured was determined as "tensile strain". The evaluation criteria are as described below. The ratings "C", "B", and "A" are non-problematic levels for practical use.

[Evaluation criteria]

A: The tensile strength was 50 N/mm$^2$ or higher.
B: The tensile strength was 35 N/mm$^2$ or higher but lower than 50 N/mm$^2$.
C: The tensile strength was 20 N/mm$^2$ or higher but lower than 35 N/mm$^2$.
D: The tensile strength was lower than 20 N/mm$^2$.

<Total evaluation>

For all of the evaluation items, total evaluation was performed according to the evaluation criteria described below. The ratings "C", "B", and "A" are non-problematic levels for practical use.

[Evaluation criteria]

A: All of the items were rated B or higher, and none of the items were rated C or lower.
B: All of the items were rated C or higher, and any of the items was rated A.
C: All of the items were rated C or higher, and none of the items was rated A.
D: Any of the items was rated D.

Table 5

| | | Resin powder physical property | | | | | | Evaluation result | | | |
|---|---|---|---|---|---|---|---|---|---|---|---|
| | | | | | MDK evaluation | | | | Tensile test strength | | |
| | | Average circularity | Volume ave. particle dia.$D_{VA}$ (micrometer) | Melting point (°C) | MDK evaluation temp. (°C) | Ave. coating ratio | Second particle attaching ratio | Surface property | Value [N/mm$^2$] | Evaluation | Total evaluation |
| Ex. | 1 | 0.981 | 55 | 165 | 150 | 0.50 | 0.35 | A | 22.5 | C | B |
| | 2 | 0.985 | 53 | 165 | 150 | 0.40 | 0.38 | A | 40.5 | A | A |
| | 3 | 0.977 | 58 | 165 | 150 | 0.30 | 0.45 | B | 52.2 | A | A |
| | 4 | 0.981 | 52 | 165 | 150 | 0.20 | 0.50 | B | 45.6 | B | C |
| | 5 | 0.982 | 52 | 165 | 150 | 0.28 | 0.4 | B | 50.1 | A | A |
| | 6 | 0.971 | 58 | 165 | 150 | 0.21 | 0.41 | A | 48.2 | B | A |
| | 7 | 0.986 | 57 | 165 | 150 | 0.20 | 0.36 | A | 49.3 | B | A |
| | 8 | 0.978 | 55 | 165 | 150 | 0.45 | 0.25 | B | 51.8 | A | A |
| | 9 | 0.981 | 54 | 165 | 150 | 0.18 | 0.4 | B | 46.2 | B | B |
| | 10 | 0.973 | 149 | 165 | 150 | 0.28 | 0.4 | B | 45.1 | B | C |
| | 11 | 0.976 | 105 | 165 | 150 | 0.18 | 0.49 | B | 44.2 | B | B |
| | 12 | 0.974 | 125 | 165 | 150 | 0.23 | 0.44 | B | 45.3 | B | B |
| | 13 | 0.976 | 58 | 165 | 150 | 0.18 | 0.23 | B | 48.9 | B | C |
| | 14 | 0.978 | 57 | 165 | 150 | 0.17 | 0.75 | B | 40.1 | B | C |
| | 15 | 0.978 | 58 | 165 | 150 | 0.18 | 0.15 | B | 46.2 | B | C |
| | 16 | 0.978 | 60 | 165 | 150 | 0.16 | 0.85 | B | 48.9 | B | C |
| | 17 | 0.710 | 65 | 165 | 150 | 0.18 | 0.45 | B | 45.6 | B | C |
| | 18 | 0.983 | 53 | 165 | 150 | 0.51 | 0.30 | A | 26.4 | C | B |
| | 19 | 0.986 | 56 | 165 | 150 | 0.42 | 0.35 | A | 30.5 | C | B |
| | 20 | 0.977 | 52 | 165 | 150 | 0.32 | 0.40 | A | 51.2 | A | A |
| | 21 | 0.977 | 56 | 165 | 150 | 0.22 | 0.48 | B | 45.6 | B | C |
| | 22 | 0.977 | 52 | 165 | 150 | 0.23 | 0.42 | B | 48.9 | B | B |

EP 3 885 141 A1

26

| | | Resin powder physical property | | | | | | Evaluation result | | | |
|---|---|---|---|---|---|---|---|---|---|---|---|
| | | Average circularity | Volume ave. particle dia.$D_{VA}$ (micrometer) | Melting point (°C) | MDK evaluation | | Second particle attaching ratio | Surface property | Tensile test strength | | Total evaluation |
| | | | | | MDK evaluation temp. (°C) | Ave. coating ratio | | | Value [N/mm$^2$] | Evaluation | |
| | 23 | 0.977 | 55 | 165 | 150 | 0.19 | 0.35 | B | 47.7 | B | C |
| | 24 | 0.976 | 59 | 165 | 150 | 0.22 | 0.46 | A | 52.1 | A | A |
| | 25 | 0.983 | 31 | 165 | 150 | 0.18 | 0.25 | B | 39.2 | B | C |
| | 26 | 0.982 | 30 | 165 | 150 | 0.15 | 0.40 | B | 34.9 | C | C |
| | 27 | 0.977 | 58 | 145 | 130 | 0.33 | 0.47 | B | 30.4 | C | C |
| | 28 | 0.976 | 97 | 165 | 150 | 0.24 | 0.48 | A | 48.9 | B | A |
| | 29 | 0.981 | 55 | 165 | 150 | 0.20 | 0.13 | B | 22.5 | C | C |
| | 30 | 0.981 | 55 | 165 | 150 | 0.18 | 0.88 | B | 23.5 | C | C |

In Examples, MDK was 0.15 or greater, fluidity improvement was observed, and the surface property was satisfied. In Examples, because the number average particle diameter $Dn_B$ of the external additive was 1.0 micrometer or greater but 3.00 micrometers or less, the surface of the resin powder was stably coated with the external additive to enable improvement of fluidity, and the three-dimensional object satisfied the surface property. Moreover, because the volume average particle diameter $Dv_A$ of the resin powder was 30 micrometers or greater but 150 micrometers or less, the surface of the resin powder was stably coated with the external additive to enable improvement of fluidity, and the three-dimensional object satisfied the surface property.

Table 6

| | | Resin powder physical property | | | | | | Evaluation result | | | |
|---|---|---|---|---|---|---|---|---|---|---|---|
| | | | | | MDK evaluation | | Second particle attaching ratio | Surface property | Tensile test strength | | Total evaluation |
| | | Average circularity | Volume ave. particle dia.$D_{VA}$ (micrometer) | Melting point (°C) | MDK evaluation temp. (°C) | Ave. coating ratio | | | Value [N/mm$^2$] | Evaluation | |
| Comp. Ex. | 1 | 0.976 | 52 | 165 | 150 | 0.14 | 0.8 | D | 19 | D | D |
| | 2 | 0.979 | 55 | 165 | 150 | 0.09 | 0.76 | D | 18.3 | D | D |
| | 3 | 0.978 | 55 | 165 | 150 | 0.05 | 0.13 | D | 18.2 | D | D |
| | 4 | 0.976 | 52 | 125 | 110 | 0.08 | 0.23 | D | 18.7 | D | D |
| | 5 | 0.979 | 55 | 125 | 110 | 0.08 | 0.3 | D | 4.6 | D | D |
| | 6 | 0.978 | 54 | 165 | 150 | 0.09 | 0.24 | D | 19.2 | D | D |
| | 7 | 0.980 | 28 | 165 | 150 | 0.12 | 0.25 | D | 42.3 | B | D |
| | 8 | 0.965 | 155 | 165 | 150 | 0.13 | 0.2 | D | 44.1 | B | D |
| | 9 | 0.680 | 54 | 165 | 150 | 0.14 | 0.28 | D | 46.3 | B | D |
| | 10 | 0.978 | 59 | 165 | 150 | 0.13 | 0.87 | D | 48.2 | B | D |
| | 11 | 0.977 | 58 | 165 | 150 | 0.14 | 0.14 | D | 46.2 | B | D |
| | 12 | 0.978 | 54 | 165 | 150 | 0.08 | 0.14 | D | 17.5 | D | D |
| | 13 | 0.978 | 52 | 165 | 150 | 0.04 | 0.1 | D | 19.7 | D | D |
| | 14 | 0.977 | 56 | 165 | 150 | 0.03 | 0.13 | D | 18.2 | D | D |
| | 15 | 0.980 | 54 | 125 | 110 | 0.04 | 0.86 | D | 3.2 | D | D |

In Comparative Example, MDK was less than 0.15, fluidity was low, and the surface property was poor. Specifically, in Comparative Examples 1 to 6, the resin powder was coated with an external additive having a small number average particle diameter $Dn_B$ of less than 1.0 micrometer, whereas in Comparative Examples 12 to 15, the resin powder was coated with an external additive having a number average particle diameter $Dn_B$ of greater than 3.00 micrometers. Depending on the size of the external additive, the external additive may be buried or detached. As a result, MDK became less than 0.15, fluidity was low, and the surface property of the three-dimensional object was poor. In Comparative Example 7, the volume average particle diameter $Dv_A$ of the resin powder was less than 30 micrometers, whereas in Comparative Example 8, the volume average particle diameter $Dv_A$ of the resin powder was greater than 150 micrometers. Depending on the size of the resin powder, the external additive may be buried or detached. As a result, MDK became less than 0.15, fluidity was low, and the surface property of the three-dimensional object was poor.

Aspects of the present disclosure are, for example, as follows.

<1> A resin powder including
first particles containing a polyolefin-based resin,
wherein surfaces of the first particles are coated with second particles at an average coating ratio of 0.15 or greater,
where the average coating ratio is measured with a Material Development Kit (MDK) at a temperature lower than a melting point of the resin powder by 15 degrees C.

<2> The resin powder according to <1>,
wherein a ratio at which the second particles are attached is 0.20 or greater but 0.75 or less.

<3> The resin powder according to <1> or <2>,
wherein the polyolefin-based resin is a block copolymerized polypropylene.

<4> The resin powder according to any one of <1> to <3>,
wherein the second particles contain at least one of silica and alumina.

<5> The resin powder according to any one of <1> to <3>,
wherein the second particles contain at least one selected from the group consisting of styrene-based resins and acrylic-based resins.

<6> The resin powder according to any one of <1> to <5>,
wherein a content of the second particles is 0.4988% by mass or greater but 2.91% by mass or less.

<7> The resin powder according to any one of <1> to <6>,
wherein a number average particle diameter $Dn_B$ of the second particles is 1.0 micrometer or greater but 2.5 micrometers or less.

<8> The resin powder according to any one <1> to <7>,
wherein the average coating ratio is 0.20 or greater.

<9> The resin powder according to any one <1> to <8>,
wherein a volume average particle diameter $Dv_A$ of the resin powder is 30 micrometers or greater but 100 micrometers or less.

<10> A resin powder for producing a three-dimensional object, the resin powder including
first particles containing a polyolefin-based resin,
wherein surfaces of the first particles are coated with second particles at an average coating ratio of 0.15 or greater,
where the average coating ratio is measured with a Material Development Kit (MDK) at a temperature lower than a melting point of the resin powder for producing a three-dimensional object by 15 degrees C.

<11> The resin powder for producing a three-dimensional object according to <10>,
wherein a ratio at which the second particles are attached is 0.20 or greater but 0.75 or less.

<12> The resin powder for producing a three-dimensional object according to <10> or <11>,
wherein the polyolefin-based resin is a block copolymerized polypropylene.

<13> The resin powder for producing a three-dimensional object according to any one of <10> to <12>,
wherein the second particles contain at least one of silica and alumina.

<14> The resin powder for producing a three-dimensional object according to any one of <10> to <12>,
wherein the second particles contain at least one selected from the group consisting of styrene-based resins and acrylic-based resins.

<15> The resin powder for producing a three-dimensional object according to any one of <10> to <14>,
wherein a content of the second particles is 0.4988% by mass or greater but 2.91% by mass or less relative to a total amount of the resin powder for producing a three-dimensional object.

<16> The resin powder for producing a three-dimensional object according to any one of <10> to <15>,
wherein a number average particle diameter $Dn_B$ of the second particles is 1.0 micrometer or greater but 2.5 micrometers or less.

<17> The resin powder for producing a three-dimensional object according to any one of <10> to <16>,
wherein the average coating ratio is 0.20 or greater.

<18> The resin powder for producing a three-dimensional object according to any one of <10> to <17>, wherein a volume average particle diameter $Dv_A$ of the resin powder for producing a three-dimensional object is 30 micrometers or greater but 100 micrometers or less.

<19> A three-dimensional object producing method including:

forming a layer containing the resin powder for producing a three-dimensional object according to any one of <10> to <18>; and
mutually bonding particles of the resin powder for producing a three-dimensional object in a selected region of the layer,
wherein the three-dimensional object producing method repeats the forming and the mutually bonding.

<20> A three-dimensional object producing apparatus including:

a layer forming unit configured to form a layer containing the resin powder for producing a three-dimensional object according to any one of <10> to <18>; and
a powder bonding unit configured to mutually bond particles of the resin powder for producing a three-dimensional object in a selected region of the layer.
The resin powder according to any one of <1> to <9>, the resin powder for producing a three-dimensional object according to any one of <10> to <18>, the three-dimensional object producing method according to <19>, and the three-dimensional object producing apparatus according to <20> can solve the various problems in the related art and achieve the object of the present disclosure.

**Claims**

1.  A resin powder comprising
    first particles containing a polyolefin-based resin,
    wherein surfaces of the first particles are coated with second particles at an average coating ratio of 0.15 or greater,
    where the average coating ratio is measured with a Material Development Kit (MDK) at a temperature lower than a melting point of the first particles by 15 degrees C.

2.  The resin powder according to claim 1,
    wherein a ratio at which the second particles are attached is 0.20 or greater but 0.75 or less.

3.  The resin powder according to claim 1 or 2,
    wherein the polyolefin-based resin is a block copolymerized polypropylene.

4.  The resin powder according to any one of claims 1 to 3,
    wherein the second particles contain at least one of silica and alumina.

5.  The resin powder according to any one of claims 1 to 3,
    wherein the second particles contain at least one selected from the group consisting of styrene-based resins and acrylic-based resins.

6.  The resin powder according to any one of claims 1 to 5,
    wherein a content of the second particles is 0.4988% by mass or greater but 2.91% by mass or less relative to a total amount of the resin powder.

7.  The resin powder according to any one of claims 1 to 6,
    wherein a number average particle diameter $Dn_B$ of the second particles is 1.0 micrometer or greater but 2.5 micrometers or less.

8.  The resin powder according to any one of claims 1 to 7,
    wherein the average coating ratio is 0.20 or greater.

9.  The resin powder according to any one of claims 1 to 8,
    wherein a volume average particle diameter $Dv_A$ of the resin powder is 30 micrometers or greater but 150 micrometers or less.

**10.** A resin powder for producing a three-dimensional object, the resin powder comprising
first particles containing a polyolefin-based resin,
wherein surfaces of the first particles are coated with second particles at an average coating ratio of 0.15 or greater,
where the average coating ratio is measured with a Material Development Kit (MDK) at a temperature lower than
a melting point of the first particles by 15 degrees C.

**11.** A three-dimensional object producing method comprising:

forming a layer containing the resin powder for producing a three-dimensional object according to claim 10; and
mutually bonding particles of the resin powder for producing a three-dimensional object in a selected region of
the layer,
wherein the three-dimensional object producing method repeats the forming and the mutually bonding.

**12.** A three-dimensional object producing apparatus comprising:

a layer forming unit configured to form a layer containing the resin powder for producing a three-dimensional
object according to claim 10; and
a powder bonding unit configured to mutually bond particles of the resin powder for producing a three-dimensional
object in a selected region of the layer.

# FIG. 1A

Perimeter: C1
Particle projected area: S

# FIG. 1B

Circle having area S
Perimeter: C2

# FIG. 2

# FIG. 3A

# FIG. 3B

# FIG. 3C

# FIG. 3D

FIG. 3E

FIG. 3F

# FIG. 4A

# FIG. 4B

# FIG. 4C

# FIG. 4D

Europäisches
Patentamt

European
Patent Office

Office européen
des brevets

# EUROPEAN SEARCH REPORT

Application Number

EP 21 16 1453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/002714 A1 (EMAMJOMEH ALI [US] ET AL) 3 January 2019 (2019-01-03)<br>* paragraphs [0015], [0031], [0045]; claims 1,2 *<br>----- | 1-12 | INV.<br>B33Y70/00<br>B33Y70/10<br>B33Y10/00<br>B33Y30/00<br>B29C64/153<br>B29C64/165<br>C08J3/12 |
| A | EP 2 479 207 A1 (FUJI XEROX CO LTD [JP]) 25 July 2012 (2012-07-25)<br>* paragraphs [0070] - [0072], [0149], [0154], [0155]; claims 1,2 *<br>----- | 1-12 | |
| A | JP 2018 154905 A (RICOH CO LTD) 4 October 2018 (2018-10-04)<br>* paragraph [0022]; claim 1; examples *<br>----- | 1-12 | |

TECHNICAL FIELDS
SEARCHED      (IPC)

B33Y
B29C
C08J

The present search report has been drawn up for all claims

| Place of search | Date of completion of the search | Examiner |
|---|---|---|
| The Hague | 22 July 2021 | Martins Lopes, Luis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 16 1453

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2021

| Patent document cited in search report | Publication date | Patent family member(s) | Publication date |
|---|---|---|---|
| US 2019002714 A1 | 03-01-2019 | BR 112018013724 A2 | 11-12-2018 |
| | | CN 108495886 A | 04-09-2018 |
| | | EP 3443032 A1 | 20-02-2019 |
| | | JP 6680887 B2 | 15-04-2020 |
| | | JP 2019502806 A | 31-01-2019 |
| | | KR 20180093257 A | 21-08-2018 |
| | | US 2019002714 A1 | 03-01-2019 |
| | | WO 2017180166 A1 | 19-10-2017 |
| EP 2479207 A1 | 25-07-2012 | CN 102604335 A | 25-07-2012 |
| | | CN 102604408 A | 25-07-2012 |
| | | CN 102608882 A | 25-07-2012 |
| | | CN 102608884 A | 25-07-2012 |
| | | EP 2479207 A1 | 25-07-2012 |
| | | EP 2479208 A1 | 25-07-2012 |
| JP 2018154905 A | 04-10-2018 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006321711 A
- WO 2008057844 A
- US 6531086 B